# EUROPEAN PATENT SPECIFICATION

(11) **EP 4 722 007 B1**
(45) Date of publication and mention of the grant of the patent: **28.10.2026**
(21) Application number: 24866581.2
(22) Date of filing: 11.09.2024
(51) Int. Cl.: B60F 3/00, B60F 5/02, B64U 10/14

(54) **TRIPHIBIOUS RECONFIGURABLE ROBOT**
REKONFIGURIERBARER ROBOTER MIT DREI RÄDERN
ROBOT RECONFIGURABLE TRIPHIBIE

(30) Priority: 16.08.2024 CN 202411125210
(43) Date of publication of application: 08.04.2026
(73) Proprietor: Southern University of Science and Technology, Shenzhen, Guangdong 518000 (CN)
(72) Inventor: DAI, Jiansheng, Shenzhen, Guangdong 518000 (CN); SHEN, Xi, Shenzhen, Guangdong 518000 (CN); CHEN, Qi, Shenzhen Guangdong 518000 (CN); ZHU, Renjie, Shenzhen, Guangdong 518000 (CN)
(74) Representative: Porta & Consulenti Associati S.p.A.
(86) International application number: PCT/CN2024/118229
(87) International publication number: WO 2026/036468

(56) References cited:
- WO-A1-2024/106648
- CN-A- 109 334 365
- CN-A- 111 216 498
- CN-A- 114 368 255
- CN-A- 116 945 827
- CN-A- 117 533 065
- CN-A- 117 549 329
- CN-A- 117 549 329
- CN-A- 117 841 581
- CN-B- 110 254 148
- CN-B- 113 602 374

## Description

### TECHNICAL FIELD

The present disclosure relates to the technical field of metamorphic robots, and in particular to a triphibian metamorphic robot.

### BACKGROUND

In the related art, in order to improve the adaptability of a robot across different terrains, the robot is configured to have multiple walking postures, such as a standing posture, a kneeling posture, and a lying down posture. However, the robot can only realize wheel-leg switching or change its own posture by changing the configuration, so that the robot can only move on land in different walking modes, which cannot meet the requirements of multi-environmental movements in water, land, and air.

The document CN 110 254 148 B discloses an example of a triphibian metamorphic robot.

### SUMMARY

The present disclosure aims to solve at least one of the technical problems existing in the prior art. In view of this, the present disclosure provides a triphibian metamorphic robot, which has motion modes capable of adapting to the water, land and air environments, thereby meeting the multi-environmental movement requirements of the robot.

A triphibian metamorphic robot according to an embodiment of the present disclosure includes:
a metamorphic mechanism, which includes eight connecting rods and eight rotating shafts, the eight connecting rods being connected end to end in series to form a closed-loop structure, and along a circumferential direction of the closed-loop structure, the adjacent connecting rods being rotatably connected via the respective rotating shaft, and axes of the adjacent rotating shafts being perpendicular to each other, where the rotating shafts having axes parallel to a first direction are denoted as first rotating shafts, the rotating shafts having axes parallel to a second direction are denoted as second rotating shafts, and the first direction is perpendicular to the second direction;
a configuration drive mechanism, which includes four first drive elements for driving the rotating shafts to rotate, two of the first drive elements being respectively connected to two of the first rotating shafts, and the other two of the first drive elements being respectively connected to two of the second rotating shafts; and
four propellers, each of the first rotating shafts being connected to one of the propellers, and the propellers each including a rotating wheel and blades arranged inside the rotating wheel;
where the triphibian metamorphic robot has a first motion mode, a second motion mode, and a third motion mode, the triphibian metamorphic robot being configured in such a manner that, when in the first motion mode, two of the first rotating shafts have collinear axes and are positioned lower than the other two of the first rotating shafts; when in the second motion mode, lowest points of peripheral surfaces of the four propellers are coplanar; and when in the third motion mode, the axes of the four first rotating shafts are parallel, and the second rotating shafts are positioned in a space surrounded by the four first rotating shafts.

The triphibian metamorphic robot according to the embodiment of the present disclosure has at least the following beneficial effects.

According to the present disclosure, the configuration drive mechanism can drive the metamorphic mechanism to change a configuration thereof, allowing the metamorphic mechanism to switch to different postures and enabling the robot to switch between different motion modes. The robot relies on structural transformation of the metamorphic mechanism to switch between the motion modes, adapting to requirements of multi-environmental movements in water, land, and air.

According to some embodiments of the present disclosure, the triphibian metamorphic robot further has an intermediate mode, the triphibian metamorphic robot is configured in such a manner that, when in the intermediate mode, the axes of the four first rotating shafts are parallel, the adjacent connecting rods rotatably connected via the respective first rotating shaft are parallel, and the adjacent connecting rods rotatably connected via the second rotating shaft are perpendicular; and the triphibian metamorphic robot can sequentially transition through the intermediate mode, the first motion mode, the second motion mode, and the third motion mode.

According to some embodiments of the present disclosure, the second motion mode includes a first motion posture and a second motion posture, the triphibian metamorphic robot being configured in such a manner that, when in the first motion posture, the axes of the four first rotating shafts are coplanar, the adjacent connecting rods rotatably connected via the first rotating shaft form a first angle with each other, and the first rotating shafts are lower than the second rotating shafts; and when in the second motion posture, the axes of the first rotating shafts intersect, the adjacent connecting rods rotatably connected via the respective first rotating shaft form a second angle with each other, and the second angle is greater than the first angle.

According to some embodiments of the present disclosure, the adjacent connecting rods rotatably connected via the respective first rotating shaft are distributed along the axis of the respective first rotating shaft, and when the triphibian metamorphic robot is in the third motion mode, at least part of the adjacent connecting rods are arranged in an overlapping manner;
or, in the adjacent connecting rods rotatably connected via the respective first rotating shaft, one of the connecting rods is provided with a receiving recess, and when the triphibian metamorphic robot is in the third motion mode, at least part of the other one of the connecting rods is received in the receiving recess.

According to some embodiments of the present disclosure, each of the connecting rods includes a first connecting portion and a second connecting portion, with the first connecting portion and the second connecting portion forming an angle of 45° with each other, the first connecting portions of the adj acent connecting rods being rotatably connected via the respective first rotating shaft, and the second connecting portions of the adjacent connecting rods being rotatably connected via the respective second rotating shaft.

According to some embodiments of the present disclosure, in the adjacent second connecting portions rotatably connected via the respective second rotating shaft, one of the second connecting portions includes two connecting plates arranged opposite each other, and the other one of the second connecting portions is configured to receive the respective first drive element, with the first drive element connected between the two connecting plates.

According to some embodiments of the present disclosure, the triphibian metamorphic robot further includes propeller drive mechanisms, the propeller drive mechanisms each including a second drive element and a third drive element connected to the respective connecting rod, the second drive element being positioned inside the rotating wheel and connected to the blades for driving the blades to rotate, and the third drive element being connected to the rotating wheel for driving the rotating wheel to rotate.

According to some embodiments of the present disclosure, an axis of the rotating wheel is collinear with an axis of the blades, and a gap is defined between an outer side of the blades and an inner side of the rotating wheel, which collectively define a duct.

According to some embodiments of the present disclosure, the rotating wheel includes a framework and a plurality of Mecanum wheels embedded within the framework, rotational axes of the Mecanum wheels are inclined relative to an axis of the rotating wheel along a circumferential direction of the framework, and the third drive element is connected to the framework.

According to some embodiments of the present disclosure, the Mecanum wheels are arranged in at least two layers along the axis of the rotating wheel, the Mecanum wheels of each layer encircle to form a rotating unit, a maximum outer diameter of at least one of the rotating units is not larger than a minimum outer diameter of an adjacent rotating unit.

Additional aspects and advantages of the present disclosure will be set forth in part in the following description, and in part will be apparent from the following description, or may be learned by practice of the present disclosure.

### BRIEF DESCRIPTION OF DRAWINGS

The present disclosure will be further explained with reference to the accompanying drawings and embodiments. In the accompanying drawing:
FIG. 1 is a schematic diagram of a triphibian metamorphic robot of the present disclosure in a first motion mode;
FIG. 2 is a schematic diagram of the triphibian metamorphic robot of the present disclosure in a second motion mode, with the robot in a first motion posture;
FIG. 3 is a schematic diagram of the triphibian metamorphic robot of the present disclosure in the second motion mode, with the robot in a second motion posture;
FIG. 4 is a schematic diagram of the triphibian metamorphic robot of the present disclosure in a third motion mode;
FIG. 5 is a schematic diagram of a metamorphic mechanism of the triphibian metamorphic robot in an intermediate mode;
FIG. 6 is a schematic diagram of the metamorphic mechanism of the triphibian metamorphic robot in the first motion mode;
FIG. 7 is a schematic diagram of the metamorphic mechanism of the triphibian metamorphic robot in the second motion mode, with the robot in the first motion posture;
FIG. 8 is a schematic diagram of the metamorphic mechanism of the triphibian metamorphic robot in the second motion mode, with the robot in the second motion posture;
FIG. 9 is a schematic diagram of the metamorphic mechanism of the triphibian metamorphic robot in the third motion mode;
FIG. 10 is a schematic diagram of the connection between a propeller and a connecting rod according to an embodiment of the present disclosure; and
FIG. 11 is a schematic diagram of the connection between a propeller and a connecting rod according to another embodiment of the present disclosure.

### List of reference signs:

Metamorphic mechanism 100, connecting rod 110, receiving recess 111, first connecting portion 112, second connecting portion 113, connecting plate 1131, rotating shaft 120, first rotating shaft 130, second rotating shaft 140; configuration drive mechanism 200, first drive element 210; propeller 300, rotating wheel 310, framework 311, Mecanum wheel 312, rotating unit 313, blade 320, duct 330, transmission frame 340; propeller drive mechanism 400, second drive element 410, third drive element 420, gear 430.

### DETAILED DESCRIPTION

Embodiments of the present disclosure will be discussed in detail below. Examples of the embodiments are illustrated in the accompanying drawings, where the same or like reference numerals throughout the figures indicates the same or like elements having the same or like functions. The embodiments described below with reference to the accompanying drawings are exemplary and are intended only to explain the present disclosure instead of being construed as limiting the present disclosure.

In the description of the present disclosure, it should be understood that, descriptions relating to orientation, for example, orientation or positional relationships indicated by up, down, front, rear, left, right, etc. are based on the orientation or positional relationships shown in the accompanying drawings, and are to facilitate the description of the present disclosure and simplify the description only, rather than indicating or implying that the device or element referred to must have a specific orientation or be constructed and operated in a specific orientation, and therefore cannot be construed as limiting the present disclosure.

In the description of the present disclosure, the meaning of "several" is one or more; the meaning of "a plurality of" is two or more; "greater than", "less than", "more than", etc. are to be construed as excluding a given figure; and "above", "below", "within", etc. are to be construed as including a given figure. If "first" and "second", etc. are referred to, it is only for the purpose of distinguishing technical features, and shall not be construed as indicating or implying relative importance or implying the number of the indicated technical features or implying the sequence of the indicated technical features.

In the description of the present disclosure, unless otherwise explicitly defined, the terms such as "arrange", "install", and "connect" should be construed in a broad sense, and those skilled in the art can determine the specific meanings of the above terms in the present disclosure in a rational way in conjunction with the specific contents of the technical schemes.

In the present disclosure, the description with reference to terms such as "an embodiment", "some embodiments", "example embodiments", "example", "specific example", and "some examples" means that the specific features, structures, materials or features described in conjunction with the embodiment(s) or example(s) are included in at least one embodiment or example of the present disclosure. In the description, the illustrative expressions of the above-mentioned terms do not necessarily refer to the same embodiments or examples. Moreover, the specific features, structures, materials or characteristics described can be combined in any one or more embodiments or examples in any suitable manner.

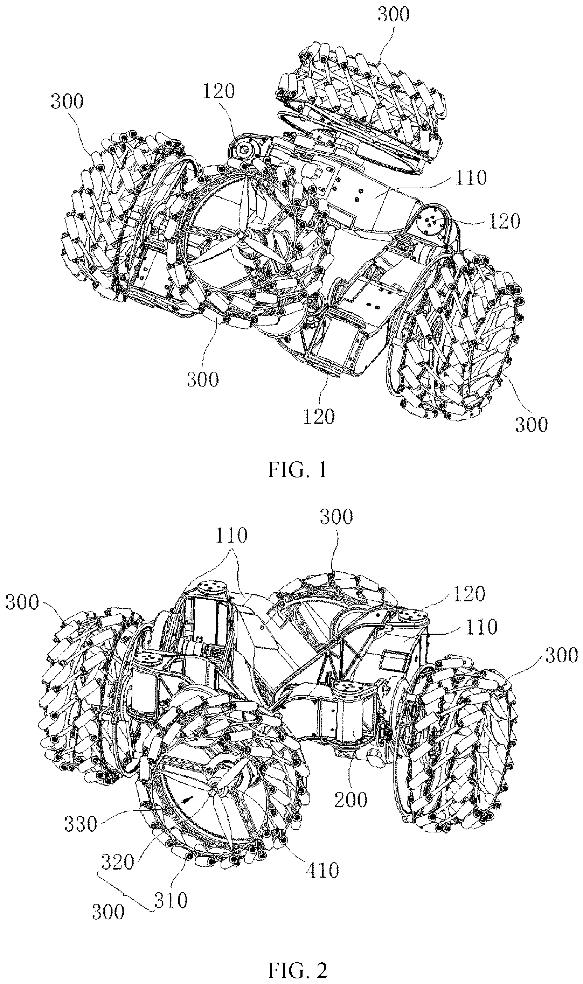

Referring to FIGS. 1 to 4, an embodiment of the present disclosure provides a triphibian metamorphic robot (hereinafter referred to as the robot), which can use its own structural changes to switch between different motion modes, and can be applied to triphibian environments of water, land, and air, achieving flight in the air, movement on the ground, and navigation in water.

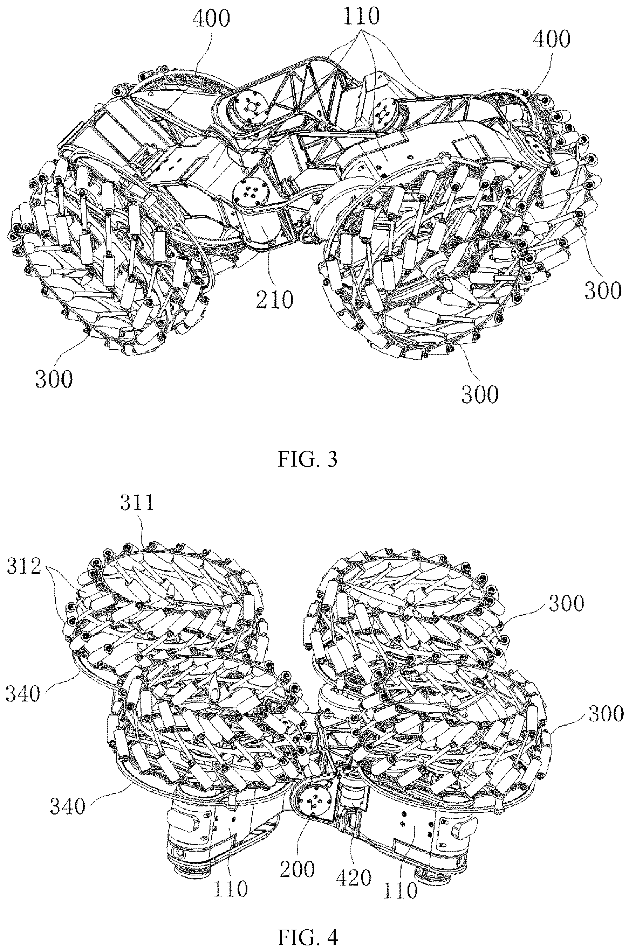

Referring to FIGS. 4 to 8 (to clearly illustrate the relationship between the components of the metamorphic mechanism, FIGS. 4 to 8 present a simplified representation of the metamorphic mechanism), the robot includes a metamorphic mechanism 100. The metamorphic mechanism 100 serves as the main structure for changing the configuration of the robot. The metamorphic mechanism 100 includes eight connecting rods 110 and eight rotating shafts 120. The eight connecting rods 110 are connected end to end in series, forming a closed-loop structure. That is, the front and rear ends of each connecting rod 110 are connected to the ends of two other connecting rods 110. Along a circumferential direction of the closed-loop structure, adjacent connecting rods 110 are rotatably connected via the rotating shaft 120, allowing adjacent connecting rods 110 to rotate relative to each other. Additionally, the rotating shaft 120 with an axis parallel to a first direction is defined as a first rotating shaft 130, while the rotating shaft 120 with an axis parallel to a second direction is defined as a second rotating shaft 140. The first direction is perpendicular to the second direction, and along the circumferential direction of the closed-loop structure, the axes of adjacent rotating shafts 120 are perpendicular to each other. That is, the first rotating shaft 130 is arranged adjacent to the second rotating shaft 140. Along the circumferential direction of the closed-loop structure, each first rotating shaft 130 has a second rotating shaft 140 on either side, and similarly, each second rotating shaft 140 has a first rotating shaft 130 on either side.

It can be understood that two ends of each connecting rod 110 are respectively connected to a first rotating shaft 130 and a second rotating shaft 140, so that one end of each connecting rod 110 can rotate about the first direction relative to the adjacent connecting rod 110, and the other end thereof can rotate about the second direction relative to the adjacent connecting rod 110.

Referring to FIGS. 1 to 4, the robot further includes a configuration drive mechanism 200. The configuration drive mechanism 200 is configured to be connected to the metamorphic mechanism 100 and change the configuration of the metamorphic mechanism 100 by driving the connecting rods 110 in the metamorphic mechanism 100 to rotate. The configuration drive mechanism 200 includes four first drive elements 210. The first drive elements 210 are configured to drive the rotating shafts 120 to rotate, and the first drive elements 210 are not limited to being provided as a motor, a steering gear, or the like. Two of the four first drive elements 210 are respectively connected to two first rotating shafts 130 and the other two are respectively connected to two second rotating shafts 140, that is, among the eight rotating shafts 120, two of the first rotating shafts 130 and two of the second rotating shafts 140 are in an underactuated state, and the other two of the first rotating shafts 130 and the other two of the second rotating shafts 140 are each connected to a first drive element 210. The first drive elements 210, when operating, drive the adjacent connecting rods 110 to rotate in the first direction and/or the second direction.

The robot further includes four propellers 300. In the present disclosure, each first rotating shaft 130 is connected to one propeller 300. Each propeller 300 includes a rotating wheel 310 and blades 320 arranged inside the rotating wheel 310. The blades 320 can rotate and are configured to disturb the airflow during flight of the robot, thus providing lift, as well as to stir the water when the robot is in water, thus providing thrust. The rotating wheel 310 can rotate and is configured to provide forward propulsion when the robot is traveling on the ground.

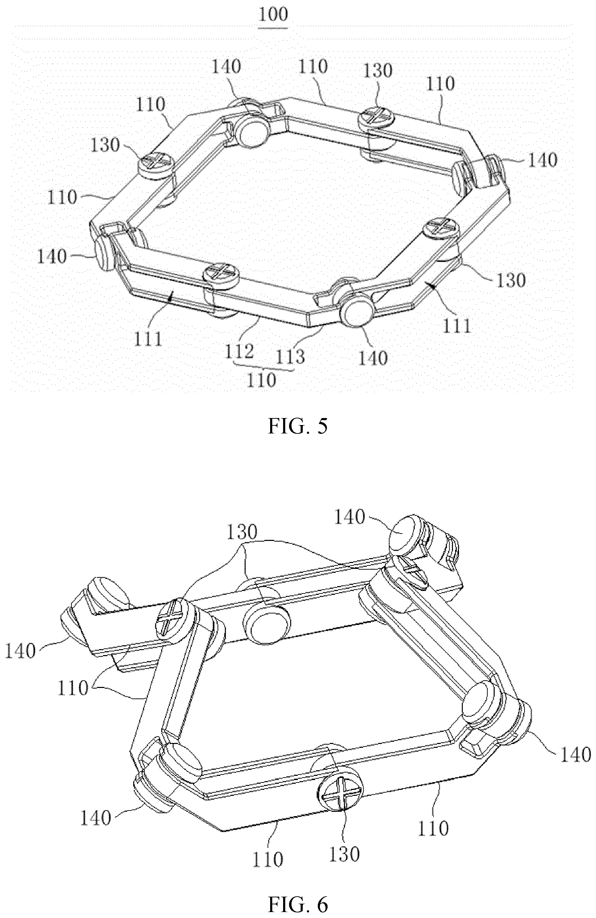

The robot in the present disclosure has a first motion mode, a second motion mode, and a third motion mode. By driving the rotating shafts 120 with the configuration drive mechanism 200, the configuration of the metamorphic mechanism 100 is altered, allowing the robot to switch between the first motion mode, the second motion mode, and the third motion mode. Referring to FIGS. 1 and 6, when the robot is in the first motion mode, two of the first rotating shafts 130 have collinear axes and are positioned lower than the other two of the first rotating shafts 130. In this configuration, the robot is capable of propulsion in water. The propellers 300 connected to the two higher first rotating shafts 130 are positioned above the water surface. The propellers 300 connected to the two lower first rotating shafts 130 are positioned on opposite sides of the robot with their axes parallel, outer peripheral surfaces of the rotating wheels 310 of the two propellers 300 are in contact with the water surface, providing buoyancy to the entire robot, the rotation axis of the blades 320 is parallel to the rotation axis of the first rotating shafts 130, and the blades 320, when rotating, stir the water to create thrust, enabling the entire robot to move.

In addition, the traveling direction of the robot can also be changed by adjusting the rotation state of the blades 320 in the two lower propellers 300. For example, the two propellers 300 connected to the two higher rotating shafts 120 are defined as a propeller 300a and a propeller 300b, respectively. When the blades 320 in the propeller 300a are set to rotate and the blades 320 in the propeller 300b are set to be stationary, the entire robot travels in a forward direction; and when the blades 320 in the propeller 300a are set to be stationary and the blades 320 in the propeller 300b are set to rotate, the entire robot travels in a reverse direction.

Referring to FIGS. 2, 3, 7, and 8, when the robot is in the second motion mode, the lowest points of the peripheral surfaces of the four propellers 300 are coplanar, similarly, the lowest points of the four first rotating shafts 130 are coplanar, and the four propellers 300 are positioned on different sides of the robot, respectively. In this configuration, the robot can travel on the ground, the peripheral surfaces of the rotating wheels 310 in the four propellers 300 can all come into contact with the ground, and the rotating wheels 310, when rotating, provide power for the motion of the robot.

It can be understood that when the robot is in the second motion mode, two of the propellers 300 are respectively positioned on two opposite sides of the robot, and the other two of the propellers 300 are positioned on the other two opposite sides of the robot. By controlling the speed of the rotating wheels 310 in different propellers 300, the overall traveling speed or traveling direction of the robot can be changed. For example, the four propellers 300 are defined as a propeller 300a, a propeller 300b, a propeller 300c, and a propeller 300d, respectively, with the propellers 300a and 300b arranged opposite each other, and the propellers 300c and 300d arranged opposite each other. When wheels 310 of the propellers 300a and 300b are set to rotate at the same speed and in the same direction, the robot travels straight. When the propellers 300a and 300b are set to rotate at different speeds, the robot performs a turning motion.

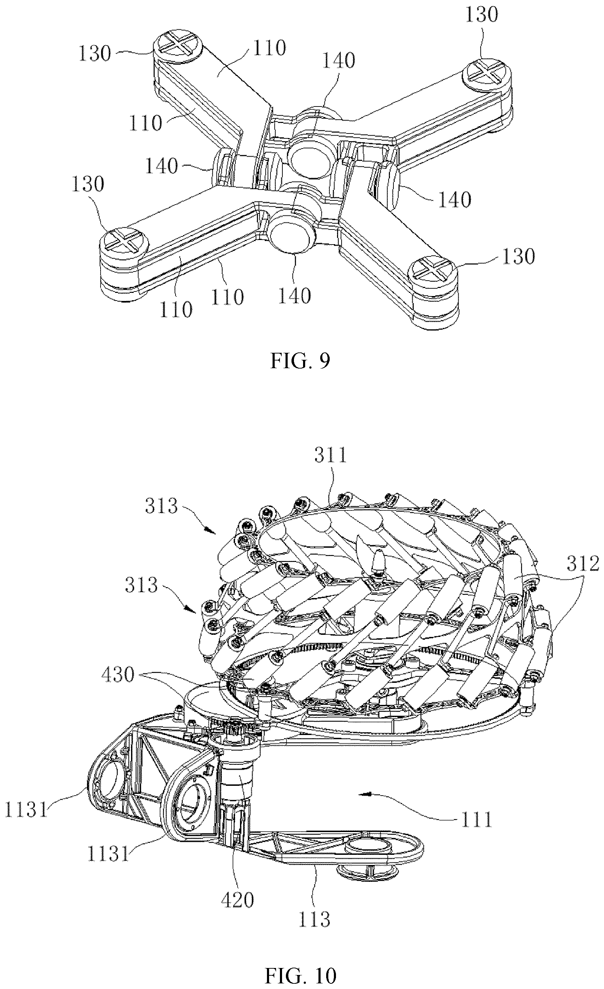

Referring to FIGS. 4 and 9, when the robot is in the third motion mode, the axes of the four first rotating shafts 130 are parallel, and the second rotating shafts 140 are positioned in a space surrounded by the four first rotating shafts 130. In this configuration, the robot is able to fly in the air. The rotation axes of the blades 320 in the four propellers 300 are parallel, and the four second rotating shafts 140 converge toward the center of the robot to reduce flight resistance of the robot. The four propellers 300 are all positioned on the outer sides of the robot, forming a quadrotor robot. The airflow generated by the rotation of the blades 320 provides lift for the flight of the robot.

According to the present disclosure, the configuration drive mechanism 200 can drive the metamorphic mechanism 100 to change a configuration thereof, allowing the metamorphic mechanism 100 to switch to different postures and enabling the robot to switch between different motion modes. The robot relies on structural transformation of the metamorphic mechanism 100 to switch between the motion modes, adapting to requirements of multi-environmental movements in water, land, and air, without resorting to external structures.

Referring to FIG. 5, the robot also has an intermediate mode. When the robot is in the intermediate mode, the axes of the four first rotating shafts 130 are parallel, the adjacent connecting rods 110 rotatably connected via the first rotating shaft 130 are parallel, and the adjacent connecting rods 110 rotatably connected via the second rotating shaft 140 are perpendicular. In this case, the closed-loop structure formed by the metamorphic mechanism 100 is square, with the second rotating shafts 140 positioned at the diagonal positions of the metamorphic mechanism 100, and the first rotating shafts 130 positioned at the center of each side of the metamorphic mechanism 100. The robot can sequentially transition through the intermediate mode, the first motion mode, the second motion mode, and the third motion mode, so that the robot can quickly switch between various motion modes, and the robot has enhanced maneuverability. It can be understood that the robot can quickly switch between different motion modes, such as switching from the second motion mode to the first motion mode or the third motion mode, or switching from the first motion mode to the second motion mode or the intermediate mode, or switching from the third motion mode to the second motion mode.

Specifically, two first rotating shafts 130 positioned at lower positions are defined as a first rotating shaft 130a and a first rotating shaft 130b, respectively. When the robot is in the first motion mode, the adjacent connecting rods 110 rotatably connected via the first rotating shaft 130a are parallel, and the adjacent connecting rods 110 rotatably connected via the first rotating shaft 130b are parallel. In this case, the connecting rods 110 connected via the first rotating shaft 130a and the first rotating shaft 130b are all parallel to each other. This configuration increases the contact area between the robot and the water surface, resulting in smoother movement of the robot in the water and reducing wobbling during the navigation of the robot. It can be understood that, in other embodiments, the adjacent connecting rods 110 rotatably connected via the first rotating shaft 130a are arranged at an angle to each other, and the adjacent connecting rods 110 rotatably connected via the first rotating shaft 130b are arranged at an angle to each other.

Further, when the robot is in the first motion mode, the two first rotating shafts 130 positioned at the higher positions and the adjacent connecting rods 110 rotatably connected via the first rotating shafts 130 at the higher positions are all positioned between the two first rotating shafts 130 at the lower positions, such that the structural connection of the robot in the first motion mode is more compact, leading to smoother operation.

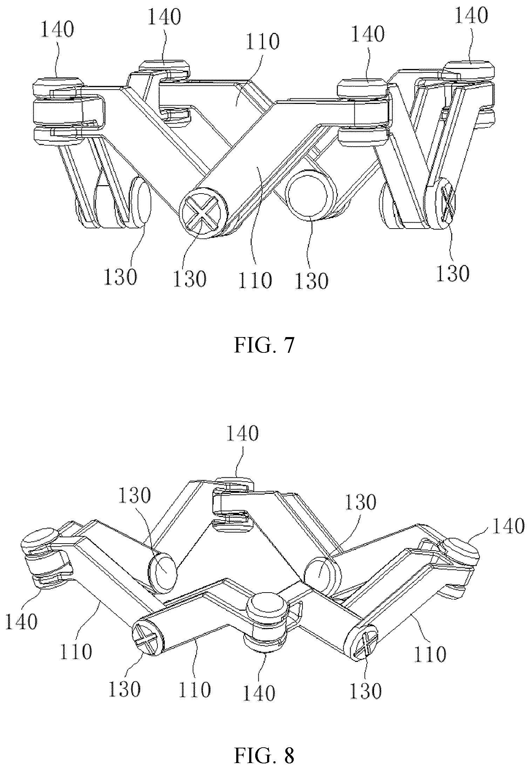

The second motion mode includes a first motion posture and a second motion posture. Referring to FIGS. 2 and 7, when the robot is in the first motion posture, the axes of the four first rotating shafts 130 are coplanar. In this case, two of the first rotating shafts 130 are positioned on two opposite sides of the metamorphic mechanism 100, and the axes of these two first rotating shafts 130 are parallel, while the other two of the first rotating shafts 130 are positioned on the other two opposite sides of the metamorphic mechanism 100, and the axes of these two first rotating shafts 130 are also parallel. The direction of the axes of two parallel first rotating shafts 130 is defined as X, while the direction of the axes of the other two parallel first rotating shafts 130 is defined as Y, where X and Y are perpendicular to each other, and the axes of all four first rotating shafts 130 are all in the same plane.

Referring to FIGS. 3 and 8, when the robot is in the second motion posture, the axes of the four first rotating shafts 130 intersect, that is, the axes of the four first rotating shafts 130 are non-parallel with one another. When the robot is in the first motion posture, the adjacent connecting rods 110 rotatably connected via the first rotating shaft 130 form a first angle with each other, and when the robot is in the second motion posture, the adjacent connecting rods 110 rotatably connected via the first rotating shaft 130 form a second angle with each other, and the second angle is greater than the first angle. Therefore, in the first motion posture, the connecting rods 110 are oriented closer to the center of the robot compared to the connecting rods 110 in the second motion posture. The overall projection area of the robot on a horizontal plane in the first motion posture is smaller than that in the second motion posture. In the second motion posture, the robot can provide a larger mounting area and space for other modules to be carried within the robot. The structure of the robot in the first motion posture is more compact, offering greater mobility and convenience.

In the present disclosure, the adjacent connecting rods 110 rotatably connected via the first rotating shaft 130 are distributed along the axis of the first rotating shaft 130. For example, two connecting rods 110 are distributed along the axis of a first rotating shaft 130, and the ends of these two connecting rods 110 are rotatably connected via the first rotating shaft 130. When the robot is in the third motion mode, the two connecting rods 110 achieve at least partial overlapping of the adjacent connecting rods 110 along the axis of the first rotating shaft 130 by rotating relative to each other about the first direction. Due to the overlapping of the adjacent connecting rods 110, the two connecting rods 110 rotatably connected via the first rotating shaft 130 together form a cantilever connecting the propeller 300. One end of the cantilever is connected to the propeller 300, and the other end is connected to the second rotating shaft 140, and the second rotating shaft 140 is positioned at the center of the robot to reduce resistance of the robot during flight, resulting in high flight efficiency for the robot.

In another embodiment, referring to FIGS. 5 and 9, in the adjacent connecting rods 110 connected via the first rotating shaft 130, one of the connecting rods 110 is provided with a receiving recess 111, and when the robot is in the third motion mode, at least a portion of the other one of the connecting rods 110 is received in the receiving recess 111, allowing the two connecting rods 110 to overlap in the direction of the axis of the first rotating shaft 130. Thus, the two connecting rods 110 rotatably connected via the first rotating shaft 130 together form a cantilever connecting the propeller 300. One end of the cantilever is connected to the propeller 300, and the other end is connected to the second rotating shaft 140, and the second rotating shaft 140 is positioned at the center of the robot to reduce resistance of the robot during flight.

As can be understood, one of the adjacent connecting rods 110 rotatably connected via the first rotating shaft 130 has a receiving recess 111. Similarly, one of the adjacent connecting rods 110 rotatably connected via the second rotating shaft 140 has a receiving recess 111. In order to maximize the overlapping of the adjacent connecting rods 110, rotating parts are provided at both ends of the connecting rods 110, the rotating parts of the adjacent connecting rods 110 are rotatably connected via the first rotating shaft 130 or the second rotating shaft 140, and in the adjacent connecting rods 110 rotatably connected via the first rotating shaft 130, the receiving recess 111 is defined between the two rotating parts of one of the connecting rods 110, so that the other one of the connecting rods 110, excluding the rotating parts thereof, can be received in the receiving recess 111, resulting in a high overlapping degree of the adjacent connecting rods 110.

In the present disclosure, each connecting rod 110 includes a first connecting portion 112 and a second connecting portion 113, the first connecting portion 112 and the second connecting portion 113 forming an angle of 45° with each other. The first connecting portions 112 of the adjacent connecting rods 110 are rotatably connected via the first rotating shaft 130, the second connecting portions 113 of the adjacent connecting rods 110 are rotatably connected via the second rotating shaft 140, and the receiving recess 111 is provided in the first connecting portion 112. When the robot is in the third motion mode, in the adjacent connecting rods 110 connected via the first rotating shaft 130, the first connecting portion 112 of one of the connecting rods 110 is received within the receiving recess 111 of the other one of the connecting rods 110. The first connecting portions 112 of two connecting rods 110 together form a cantilever, and adjacent cantilevers are perpendicular to each other. The propeller 300 is connected to one end of the cantilever, while the second connecting portion 113 is connected to the other end of the cantilever. The adjacent second connecting portions 113 rotatably connected via the second rotating shaft 140 are positioned between adjacent cantilevers, and the adjacent connecting rods 110 rotatably connected via the second rotating shaft 140 have their second connecting portions 113 parallel to each other. The second connecting portions 113 of the adjacent connecting rods 110 rotatably connected via the first rotating shaft 130 are perpendicular to each other and can make contact with one another. The second connecting portions 113 can be maximally brought closer together, concentrating at the center of the robot.

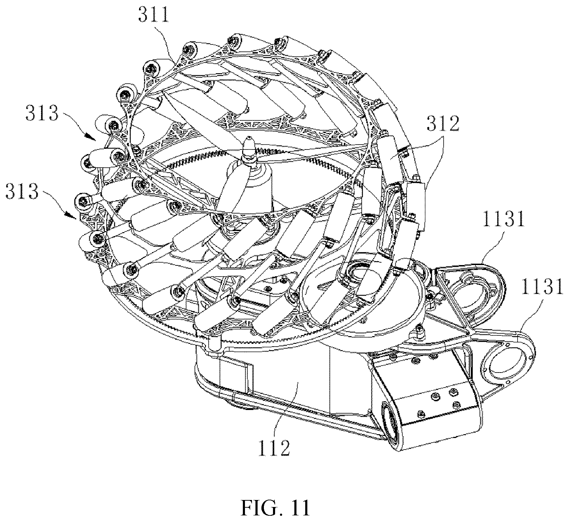

Further, referring to FIGS. 10 and 11, in the adjacent second connecting portions 113 rotatably connected via the second rotating shaft 140, one of the second connecting portions 113 includes two connecting plates 1131 arranged opposite each other, and the other one of the second connecting portions 113 receives the first drive element 210 therein, with the first drive element 210 connected between the two connecting plates 1131. Thus, the first drive element 210 can be disposed inside the connecting rod 110, and the first drive element 210 drives the two second connecting portions 113 to rotate about the second direction.

It should be noted that, in the present disclosure, the first drive elements 210 are connected to any two first rotating shafts 130 and any two second rotating shafts 140, and the two first rotating shafts 130 connected to the first drive elements 210 may be adjacent or interspersed along the circumferential direction of the metamorphic mechanism 100. Similarly, the two second rotating shafts 140 connected to the first drive elements 210 may be adjacent or interspersed along the circumferential direction of the metamorphic mechanism 100. Therefore, there is a connecting rod 110 provided with two first drive elements 210, the two first drive elements 210 being connected to both ends of the connecting rod 110 and used to drive the connecting rod 110 to rotate about the first direction and the second direction, respectively, and there is a connecting rod 110 provided with one first drive element 210, the first drive element 210 being arranged at an end of the connecting rod 110 and used to drive the connecting rod 110 to rotate about the first direction or the second direction.

Further, in the present disclosure, three forms of connecting rods 110 are included. One form of connecting rod 110 has a first connecting portion 112 that is provided with a receiving recess 111 and a second connecting portion 113 that includes two spaced connecting plates 1131. Another form of connecting rod 110 has a first connecting portion 112 that is not provided with a receiving recess 111 and can accommodate a first drive element 210 therein, and a second connecting portion 113 that includes two spaced connecting plates 1131. A further form of connecting rod 110 has a first connecting portion 112 that is not provided with a receiving recess 111 and a second connecting portion 113 that is not provided with connecting plates 1131, where both the first connecting portion 112 and the second connecting portion 113 can accommodate a first drive element 210 therein. The forms of the connecting rods 110 are selected for connection based on the positions of the first rotating shafts 130 and the second rotating shafts 140 and the position setting requirements of the first drive elements 210.

Referring to FIGS. 1 to 4, the robot further includes propeller drive mechanisms 400, the propeller drive mechanisms 400 each includes a second drive element 410 and a third drive element 420 connected to the connecting rod 110. The second drive element 410 is positioned inside the rotating wheel 310 and connected to the blades 320 for driving the blades 320 to rotate, and the third drive element 420 is connected to the rotating wheel 310 for driving the rotating wheel 310 to rotate. Therefore, when the robot is in the first motion mode or the third motion mode, the third drive element 420 does not work, and the second drive element 410 drives the blades 320 to rotate, and when the robot is in the second motion mode, the second drive element 410 does not work, and the third drive element 420 drives the rotating wheel 310 to rotate. The rotation of the blades 320 and the rotation of the rotating wheel 310 are independent of each other, and can meet the movement requirements of the robot in different motion modes.

In the present disclosure, an axis of the rotating wheel 310 is collinear with an axis of the blades 320, and a gap is defined between an outer side of the blades 320 and an inner side of the rotating wheel 310, which collectively define a duct 330 for airflow to flow through, ensuring that the rotation of the blades 320 can provide lift for the flight of the robot. In addition, the rotating wheel 310 may be configured in a hollow form, allowing the duct 330 to communicate with the external space of the rotating wheel 310. This enhances airflow during the rotation of the blades 320 and reduces lift loss caused by airflow interference.

The rotating wheel 310 includes a framework 311 and a plurality of Mecanum wheels 312 embedded within the framework 311. Rotational axes of the Mecanum wheels 312 are inclined relative to an axis of the rotating wheel 310 along a circumferential direction of the framework 311, that is, the generatrices of the Mecanum wheels 312 are inclined along the circumferential direction of the framework 311. When the robot is in the second motion mode, the Mecanum wheels 312 of the four propellers 300 are all in contact with the ground and can rotate synchronously, enabling omnidirectional movement of the robot on land.

Additionally, there are gaps between adjacent Mecanum wheels 312 along the circumferential direction of the framework 311, allowing the duct 330 inside the rotating wheel 310 to communicate with the external space of the rotating wheel 310, ensuring airflow and reducing lift loss.

The third drive element 420 is connected to the framework 311 and drives the framework 311 to rotate. The Mecanum wheels 312 rotate along their own generatrices while the framework 311 rotates, allowing the robot to move omnidirectionally. The rotation axis of the framework 311 may be set parallel to the rotation axis of the blades 320, which helps reduce the risk of interference during their movement. Moreover, when the robot is in the first motion mode, water can flow through the gap between the framework 311 and the blades 320, and when the robot is in the third motion mode, airflow can flow through the gap between the framework 311 and the blades 320, reducing the motion resistance of the robot in the first and third motion modes.

In an embodiment, the third drive element 420 is mounted to the second connection portion 113 of the connecting rod 110, or the third drive element 420 is arranged at a connection position between the first connecting portion 112 and the second connecting portion 113, and an output end of the third drive element 420 is connected to the framework 311. Further, one end of the framework 311 in its axial direction is connected to a transmission frame 340. The transmission frame 340 is annular in shape. The inner side of the transmission frame 340 is provided with teeth. One end of the third drive element 420 is drivingly connected to several gears 430, with one of the gears 430 engaging with the teeth inside the transmission frame 340, so as to transmit the rotational power of the third drive element 420 to the transmission frame 340, causing the transmission frame 340 to drive the framework 311 to rotate. Since the gear 430 engages with the inner side of the transmission frame 340, the transmission structure between the third drive element 420 and the rotating wheel 310 is designed to avoid interference with the rotation of the rotating wheel 310, allowing the rotating wheel 310 to rotate smoothly.

In the present disclosure, the Mecanum wheels 312 are arranged in at least two layers along the axis of the rotating wheel 310, the Mecanum wheels 312 of each layer encircle to form a rotating unit 313, a maximum outer diameter of at least one of the rotating units 313 is not larger than a minimum outer diameter of an adjacent rotating unit 313, creating a trend of varying outer diameters of the adjacent rotating unit 313. The outer diameter of the rotating unit 313 is defined as the outer diameter of the outer peripheral surface formed by the generatrices of the plurality of Mecanum wheels 312 within the corresponding rotating unit 313. When the robot switches to the second motion mode and is in the first motion posture, the Mecanum wheels 312 within the rotating unit 313 with the larger outer diameter make contact with the ground, while the Mecanum wheels 312 within the rotating unit 313 with the smaller outer diameter do not make contact with the ground. When the robot is in the second motion posture, the Mecanum wheels 312 within the rotating unit 313 with the smaller outer diameter make contact with the ground, while the Mecanum wheels 312 within the rotating unit 313 with the larger outer diameter do not make contact with the ground. That is, regardless of the posture of the robot while moving on the ground, there is always a corresponding layer of rotating unit 313 in contact with the ground, providing linear velocity for movement of the robot.

It can be understood that when the robot is in the second motion mode, the rotating unit 313 with the larger outer diameter is positioned closer to the center of the robot compared to the rotating unit 313 with the smaller outer diameter. The outer peripheral surface of the rotating unit 313 with the larger outer diameter is inclined relative to the outer peripheral surface of the rotating unit 313 with the smaller outer diameter, forming an angle *a.* This angle *a* can be set based on the degree of contraction or expansion when the robot switches between the first motion posture and the second motion posture.

Although the embodiments of the present disclosure have been described in detail above with reference to the accompanying drawings, the present disclosure is not limited to the above embodiments, and various changes may be made within the knowledge of those of ordinary skill in the art without departing from the scope of the invention as defined by the claims.

## Claims

1. A triphibian metamorphic robot, comprising:
a metamorphic mechanism (100), which comprises eight connecting rods (110) and eight rotating shafts (120), the eight connecting rods (110) being connected end to end in series to form a closed-loop structure, and along a circumferential direction of the closed-loop structure, the adjacent connecting rods (110) being rotatably connected via the respective rotating shaft (120), and axes of the adjacent rotating shafts (120) being perpendicular to each other, wherein the rotating shafts (120) having axes parallel to a first direction are denoted as first rotating shafts (130), the rotating shafts (120) having axes parallel to a second direction are denoted as second rotating shafts (140), and the first direction is perpendicular to the second direction;
a configuration drive mechanism (200), which comprises four first drive elements (210) for driving the rotating shafts (120) to rotate, two of the first drive elements (210) being respectively connected to two of the first rotating shafts (130), and the other two of the first drive elements (210) being respectively connected to two of the second rotating shafts (140); and
four propellers (300), each of the first rotating shafts (130) being connected to one of the propellers (300), and the propellers (300) each comprising a rotating wheel (310) and blades (320) arranged inside the rotating wheel (310);
wherein the triphibian metamorphic robot has a first motion mode, a second motion mode, and a third motion mode, the triphibian metamorphic robot being configured in such a manner that, when in the first motion mode, two of the first rotating shafts (130) have collinear axes and are positioned lower than the other two of the first rotating shafts (130); when in the second motion mode, lowest points of peripheral surfaces of the four propellers (300) are coplanar; and when in the third motion mode, the axes of the four first rotating shafts (130) are parallel, and the second rotating shafts (140) are positioned in a space surrounded by the four first rotating shafts (130).

2. The triphibian metamorphic robot of claim 1, wherein the triphibian metamorphic robot further has an intermediate mode, the triphibian metamorphic robot is configured in such a manner that, when in the intermediate mode, the axes of the four first rotating shafts (130) are parallel, the adjacent connecting rods (110) rotatably connected via the first rotating shaft (130) are parallel, and the adjacent connecting rods (110) rotatably connected via the second rotating shaft (140) are perpendicular; and the triphibian metamorphic robot is able to sequentially transition through the intermediate mode, the first motion mode, the second motion mode, and the third motion mode.

3. The triphibian metamorphic robot of claim 1, wherein the second motion mode comprises a first motion posture and a second motion posture, the triphibian metamorphic robot being configured in such a manner that, when in the first motion posture, the axes of the four first rotating shafts (130) are coplanar, the adjacent connecting rods (110) rotatably connected via the respective first rotating shaft (130) form a first angle with each other, and the first rotating shafts (130) are lower than the second rotating shafts (140); and when in the second motion posture, the axes of the first rotating shafts (130) intersect, the adjacent connecting rods (110) rotatably connected via the respective first rotating shaft (130) form a second angle with each other, and the second angle is greater than the first angle.

4. The triphibian metamorphic robot of claim 1, wherein the adjacent connecting rods (110) rotatably connected via the respective first rotating shaft (130) are distributed along the axis of the respective first rotating shaft (130), and when the triphibian metamorphic robot is in the third motion mode, at least part of the adjacent connecting rods (110) are arranged in an overlapping manner;
or, in the adjacent connecting rods (110) rotatably connected via the respective first rotating shaft (130), one of the connecting rods (110) is provided with a receiving recess (111), and when the triphibian metamorphic robot is in the third motion mode, at least part of the other one of the connecting rods (110) is received in the receiving recess (111).

5. The triphibian metamorphic robot of claim 1, wherein each of the connecting rods (110) comprises a first connecting portion (112) and a second connecting portion (113), with the first connecting portion (112) and the second connecting portion (113) forming an angle of 45° with each other, the first connecting portions (112) of the adjacent connecting rods (110) being rotatably connected via the respective first rotating shaft (130), and the second connecting portions (113) of the adjacent connecting rods (110) being rotatably connected via the respective second rotating shaft (140).

6. The triphibian metamorphic robot of claim 5, wherein in the adjacent second connecting portions (113) rotatably connected via the respective second rotating shaft (140), one of the second connecting portions (113) comprises two connecting plates (1131) arranged opposite each other, and the other one of the second connecting portions (113) is configured to receive the respective first drive element (210), with the first drive element (210) connected between the two connecting plates (1131).

7. The triphibian metamorphic robot of claim 1, further comprising propeller drive mechanisms (400), the propeller drive mechanisms (400) each comprising a second drive element (410) and a third drive element (420) connected to the respective connecting rod (110), the second drive element (410) being positioned inside the rotating wheel (310) and connected to the blades (320) for driving the blades (320) to rotate, and the third drive element (420) being connected to the rotating wheel (310) for driving the rotating wheel (310) to rotate.

8. The triphibian metamorphic robot of claim 7, wherein an axis of the rotating wheel (310) is collinear with an axis of the blades (320), and a gap is defined between an outer side of the blades (320) and an inner side of the rotating wheel (310), which collectively define a duct (330).

9. The triphibian metamorphic robot of claim 7, wherein the rotating wheel (310) comprises a framework (311) and a plurality of Mecanum wheels (312) embedded within the framework (311), rotational axes of the Mecanum wheels (312) are inclined relative to an axis of the rotating wheel (310) along a circumferential direction of the framework (311), and the third drive element (420) is connected to the framework (311).

10. The triphibian metamorphic robot of claim 9, wherein the Mecanum wheels (312) are arranged in at least two layers along the axis of the rotating wheel (310), the Mecanum wheels (312) of each layer encircle to form a rotating unit (313), a maximum outer diameter of at least one of the rotating units (313) is not larger than a minimum outer diameter of an adjacent rotating unit (313).

## Patentansprüche

1. Triphibischer Metamorphose-Roboter, umfassend:
einen Metamorphose-Mechanismus (100), der acht Verbindungsstangen (110) und acht Drehwellen (120) umfasst, wobei die acht Verbindungsstangen (110) Ende an Ende in Reihe verbunden sind, um eine geschlossene Schleifenstruktur zu bilden, und entlang einer Umfangsrichtung der geschlossenen Schleifenstruktur die benachbarten Verbindungsstangen (110) über die jeweilige Drehwelle (120) drehbar miteinander verbunden sind, und die Achsen der benachbarten Drehwellen (120) senkrecht zueinander stehen, wobei die Drehwellen (120) Achsen aufweisen, die parallel zu einer ersten Richtung sind und als erste Drehwellen (130) bezeichnet werden, die Drehwellen (120) Achsen aufweisen, die parallel zu einer zweiten Richtung sind und als zweite Drehwellen (140) bezeichnet werden und die erste Richtung senkrecht zur zweiten Richtung steht;
einen Konfigurationsantriebsmechanismus (200), der vier erste Antriebselemente (210) zum Antreiben der Drehwellen (120) umfasst, wobei jeweils zwei der ersten Antriebselemente (210) mit jeweils zwei der ersten Drehwellen (130) verbunden sind, wobei die anderen beiden der ersten Laufwerke (210) jeweils mit zwei der zweiten Drehwellen (140) verbunden sind; und
vier Propeller (300), wobei jede der ersten Drehwellen (130) mit einem der Propeller (300) verbunden ist und die Propeller (300) jeweils ein Drehrad (310) und innerhalb des Drehrads (310) angeordnete Flügel (320) umfassen;
wobei der triphibische Metamorphose-Roboter einen ersten Bewegungsmodus, einen zweiten Bewegungsmodus und einen dritten Bewegungsmodus aufweist, wobei der triphibische Metamorphose-Roboter derart konfiguriert ist, dass im ersten Bewegungsmodus zwei der ersten Drehwellen (130) kolineare Achsen aufweisen und tiefer positioniert sind als die anderen beiden der ersten Drehwellen (130); im zweiten Bewegungsmodus die tiefsten Punkte der Umfangsflächen der vier Propeller (300) koplanar liegen; und im dritten Bewegungsmodus die Achsen der vier ersten Drehwellen (130) parallel verlaufen und die zweiten Drehwellen (140) in einem von den vier ersten Drehwellen (130) umschlossenen Raum positioniert sind.

2. Triphibischer Metamorphose-Roboter nach Anspruch 1, wobei der triphibische Metamorphose-Roboter ferner einen Zwischenmodus aufweist und der triphibische Metamorphose-Roboter derart konfiguriert ist, dass im Zwischenmodus die Achsen der vier ersten Drehwellen (130) parallel verlaufen, die benachbarten, über die erste Drehwelle (130) drehbar verbundenen Verbindungsstangen (110) parallel zueinander verlaufen und die benachbarten, über die zweite Drehwelle (140) drehbar verbundenen Verbindungsstangen (110) senkrecht zueinander stehen; und der triphibische Metamorphose-Roboter in der Lage ist, nacheinander in den Zwischenmodus, den ersten Bewegungsmodus, den zweiten Bewegungsmodus und den dritten Bewegungsmodus zu wechseln.

3. Triphibischer Metamorphose-Roboter nach Anspruch 1, wobei der zweite Bewegungsmodus eine erste Bewegungshaltung und eine zweite Bewegungshaltung umfasst, wobei der triphibische Metamorphose-Roboter derart konfiguriert ist, dass in der ersten Bewegungshaltung die Achsen der vier ersten Drehwellen (130) koplanar sind, die benachbarten Verbindungsstangen (110), die über die jeweilige erste Drehwelle (130) drehbar verbunden sind, einen ersten Winkel zueinander bilden und die ersten Drehwellen (130) tiefer liegen als die zweiten Drehwellen (140); und sich in der zweiten Bewegungsstellung die Achsen der ersten Drehwellen (130) schneiden, die benachbarten Verbindungsstangen (110), die über die jeweilige erste Drehwelle (130) drehbar verbunden sind, einen zweiten Winkel miteinander bilden und der zweite Winkel größer ist als der erste Winkel.

4. Triphibischer Metamorphose-Roboter nach Anspruch 1, wobei die benachbarten Verbindungsstangen (110), die über die jeweilige erste Drehwelle (130) drehbar verbunden sind, entlang der Achse der jeweiligen ersten Drehwelle (130) verteilt sind, und wobei, wenn sich der triphibische Metamorphose-Roboter im dritten Bewegungsmodus befindet, mindestens ein Teil der benachbarten Verbindungsstangen (110) überlappend angeordnet ist; oder bei den benachbarten Verbindungsstangen (110), die über die jeweilige erste Drehwelle (130) drehbar verbunden sind, eine der Verbindungsstangen (110) mit einer Aufnahmeaussparung (111) bereitgestellt ist, und wenn sich der triphibische Metamorphose-Roboter im dritten Bewegungsmodus befindet, zumindest ein Teil der anderen der Verbindungsstangen (110) in der Aufnahmeaussparung (111) aufgenommen wird.

5. Triphibischer Metamorphose-Roboter nach Anspruch 1, wobei jede der Verbindungsstangen (110) einen ersten Verbindungsabschnitt (112) und einen zweiten Verbindungsabschnitt (113) umfasst, wobei der erste Verbindungsabschnitt (112) und der zweite Verbindungsabschnitt (113) einen Winkel von 45° zueinander bilden, wobei die ersten Verbindungsabschnitte (112) der benachbarten Verbindungsstangen (110) über die jeweilige erste Drehwelle (130) drehbar miteinander verbunden sind, und die zweiten Verbindungsabschnitte (113) der benachbarten Verbindungsstangen (110) über die jeweilige zweite Drehwelle (140) drehbar miteinander verbunden sind.

6. Triphibischer Metamorphose-Roboter nach Anspruch 5, wobei in den benachbarten zweiten Verbindungsabschnitten (113), die über die jeweilige zweite Drehwelle (140) drehbar miteinander verbunden sind, einer der zweiten Verbindungsabschnitte (113) zwei einander gegenüberliegend angeordnete Verbindungsplatten (1131) umfasst und der andere der zweiten Verbindungsabschnitte (113) so konfiguriert ist, dass er das jeweilige erste Antriebselement (210) aufnimmt, wobei das erste Antriebselement (210) zwischen den beiden Verbindungsplatten (1131) verbunden ist.

7. Triphibischer Metamorphose-Roboter nach Anspruch 1, ferner umfassend Propellerantriebsmechanismen (400), wobei die Propellerantriebsmechanismen (400) jeweils ein zweites Antriebselement (410) und ein drittes Antriebselement (420) umfassen, die mit der jeweiligen Verbindungsstange (110) verbunden sind, wobei das zweite Antriebselement (410) innerhalb des rotierenden Rades (310) positioniert und mit den Flügeln (320) verbunden ist, um die Flügel (320) in Drehung zu versetzen, und das dritte Antriebselement (420) mit dem drehenden Rad (310) verbunden ist, um das drehende Rad (310) in Drehung zu versetzen.

8. Triphibischer Metamorphose-Roboter nach Anspruch 7, wobei eine Achse des rotierenden Rades (310) kolinear zu einer Achse der Flügel (320) verläuft und zwischen einer äußeren Seite der Flügel (320) und einer Innenseite des drehenden Rades (310) ein Spalt gebildet wird, wodurch gemeinsam ein Kanal (330) gebildet wird.

9. Triphibischer Metamorphose-Roboter nach Anspruch 7, wobei das Drehrad (310) ein Framework (311) und eine Vielzahl von Mecanum-Rädern (312) umfasst, die in das Framework (311) eingebettet sind, die Drehachsen der Mecanum-Räder (312) relativ zu einer Achse des Drehrads (310) entlang einer Umfangsrichtung des Frameworks (311) geneigt sind und das dritte Laufwerk (420) mit dem Framework (311) verbunden ist.

10. Triphibischer Metamorphose-Roboter nach Anspruch 9, wobei die Mecanum-Räder (312) in mindestens zwei Schichten entlang der Achse des Drehrades (310) angeordnet sind, die Mecanum-Räder (312) jeder Schicht eine Dreheinheit (313) bilden, und der maximale Außendurchmesser mindestens einer der Dreheinheiten (313) nicht größer ist als der minimale Außendurchmesser einer benachbarten Dreheinheit (313).

## Revendications

1. Robot métamorphique triphibie, comprenant :
un mécanisme métamorphique (100), qui comprend huit bielles (110) et huit arbres rotatifs (120), les huit bielles (110) étant reliées bout à bout en série pour former une structure en boucle fermée, et le long d'une direction circonférentielle de la structure en boucle fermée, les bielles (110) adjacentes étant reliées de manière rotative par l'intermédiaire de l'arbre rotatif (120) respectif, et les axes des arbres rotatifs (120) adjacents étant perpendiculaires entre eux, dans lequel les arbres rotatifs (120) ayant des axes parallèles à une première direction sont appelés premiers arbres rotatifs (130), les arbres rotatifs (120) ayant des axes parallèles à une deuxième direction sont appelés deuxièmes arbres rotatifs (140), et la première direction est perpendiculaire à la deuxième direction ;
un mécanisme d'entraînement de configuration (200), qui comprend quatre premiers éléments d'entraînement (210) pour l'entraînement des arbres rotatifs (120) en rotation, deux éléments parmi les premiers éléments d'entraînement (210) étant respectivement reliés à deux arbres parmi les premiers arbres rotatifs (130), et les deux autres éléments parmi les premiers éléments d'entraînement (210) étant respectivement reliés à deux arbres parmi les deuxièmes arbres rotatifs (140) ; et
quatre hélices (300), chacun des premiers arbres rotatifs (130) étant relié à l'une des hélices (300), et les hélices (300) comprenant chacune une roue rotative (310) et des pales (320) agencées à l'intérieur de la roue rotative (310) ;
dans lequel le robot métamorphique triphibie comporte un premier mode de mouvement, un deuxième mode de mouvement et un troisième mode de mouvement, le robot métamorphique triphibie étant configuré d'une manière telle que, lorsqu'il est dans le premier mode de mouvement, deux arbres parmi les premiers arbres rotatifs (130) comportent des axes colinéaires et sont positionnés plus bas que les deux autres arbres parmi les premiers arbres rotatifs (130) ; lorsqu'il est dans le deuxième mode de mouvement, les points les plus bas de surfaces périphériques des quatre hélices (300) sont coplanaires ; et lorsqu'il est dans le troisième mode de mouvement, les axes des quatre premiers arbres rotatifs (130) sont parallèles, et les deuxièmes arbres rotatifs (140) sont positionnés dans un espace encerclé par les quatre premiers arbres rotatifs (130).

2. Robot métamorphique triphibie selon la revendication 1, dans lequel le robot métamorphique triphibie comporte en outre un mode intermédiaire, le robot métamorphique triphibie est configuré d'une manière telle que, lorsqu'il est dans le mode intermédiaire, les axes des quatre premiers arbres rotatifs (130) sont parallèles, les bielles (110) adjacentes reliées de manière rotative par l'intermédiaire du premier arbre rotatif (130) sont parallèles, et les bielles (110) adjacentes reliées de manière rotative par l'intermédiaire du deuxième arbre rotatif (140) sont perpendiculaires ; et le robot métamorphique triphibie est apte à passer en séquence par le mode intermédiaire, le premier mode de mouvement, le deuxième mode de mouvement et le troisième mode de mouvement.

3. Robot métamorphique triphibie selon la revendication 1, dans lequel le deuxième mode de mouvement comprend une première posture de mouvement et une deuxième posture de mouvement, le robot métamorphique triphibie étant configuré d'une manière telle que, lorsqu'il est dans la première posture de mouvement, les axes des quatre premiers arbres rotatifs (130) sont coplanaires, les bielles (110) adjacentes reliées de manière rotative par l'intermédiaire du premier arbre rotatif respectif (130) forment un premier angle entre elles, et les premiers arbres rotatifs (130) sont plus bas que les deuxièmes arbres rotatifs (140) ; et lorsqu'il est dans la deuxième posture de mouvement, les axes des premiers arbres rotatifs (130) se croisent, les bielles (110) adjacentes reliées de manière rotative par l'intermédiaire du premier arbre rotatif (130) respectif forment un deuxième angle entre elles, et le deuxième angle est plus grand que le premier angle.

4. Robot métamorphique triphibie selon la revendication 1, dans lequel les bielles (110) adjacentes reliées de manière rotative par l'intermédiaire du premier arbre rotatif (130) respectif sont réparties le long de l'axe du premier arbre rotatif (130) respectif, et lorsque le robot métamorphique triphibie est dans le troisième mode de mouvement, au moins une partie des bielles (110) adjacentes sont agencées d'une manière superposée ;
ou, parmi les bielles (110) adjacentes reliées de manière rotative par l'intermédiaire du premier arbre rotatif (130) respectif, l'une des bielles (110) est munie d'un évidement de réception (111), et lorsque le robot métamorphique triphibie est dans le troisième mode de mouvement, au moins une partie de l'autre des bielles (110) est reçue dans l'évidement de réception (111).

5. Robot métamorphique triphibie selon la revendication 1, dans lequel chacune des bielles (110) comprend une première portion de liaison (112) et une deuxième portion de liaison (113), la première portion de liaison (112) et la deuxième portion de liaison (113) formant un angle de 45° entre elles, les premières portions de liaison (112) des bielles (110) adjacentes étant reliées de manière rotative par l'intermédiaire du premier arbre rotatif (130) respectif, et les deuxièmes portions de liaison (113) des bielles (110) adjacentes étant reliées de manière rotative par l'intermédiaire du deuxième arbre rotatif (140) respectif.

6. Robot métamorphique triphibie selon la revendication 5, dans lequel, parmi les deuxièmes portions de liaison (113) adjacentes reliées de manière rotative par l'intermédiaire du deuxième arbre rotatif (140) respectif, l'une des deuxièmes portions de liaison (113) comprend deux plaques de liaison (1131) agencées à l'opposé l'une de l'autre, et l'autre des deuxièmes portions de liaison (113) est configurée pour recevoir le premier élément d'entraînement (210) respectif, le premier élément d'entraînement (210) étant relié entre les deux plaques de liaison (1131).

7. Robot métamorphique triphibie selon la revendication 1, comprenant en outre des mécanismes d'entraînement d'hélice (400), les mécanismes d'entraînement d'hélice (400) comprenant chacun un deuxième élément d'entraînement (410) et un troisième élément d'entraînement (420) reliés à la bielle (110) respective, le deuxième élément d'entraînement (410) étant positionné à l'intérieur de la roue rotative (310) et relié aux pales (320) pour l'entraînement des pales (320) en rotation, et le troisième élément d'entraînement (420) étant relié à la roue rotative (310) pour l'entraînement de la roue rotative (310) en rotation.

8. Robot métamorphique triphibie selon la revendication 7, dans lequel un axe de la roue rotative (310) est colinéaire avec un axe des pales (320), et un espace est défini entre un côté externe des pales (320) et un côté interne de la roue rotative (310), qui définissent collectivement un conduit (330).

9. Robot métamorphique triphibie selon la revendication 7, dans lequel la roue rotative (310) comprend une structure (311) et une pluralité de roues Mecanum (312) incorporées au sein de la structure (311), les axes de rotation des roues Mecanum (312) sont inclinés par rapport à un axe de la roue rotative (310) le long d'une direction circonférentielle de la structure (311), et le troisième élément d'entraînement (420) est relié à la structure (311).

10. Robot métamorphique triphibie selon la revendication 9, dans lequel les roues Mecanum (312) sont agencées en au moins deux couches le long de l'axe de la roue rotative (310), les roues Mecanum (312) de chaque couche sont en cercle pour former une unité rotative (313), un diamètre externe maximal d'au moins l'une des unités rotatives (313) n'est pas plus grand qu'un diamètre externe minimal d'une unité rotative (313) adjacente.
